# EUROPÄISCHE PATENTSCHRIFT

(11) **EP 0 670 851 B1**
(45) Veröffentlichungstag und Bekanntmachung des Hinweises auf die Patenterteilung: **26.02.1997**
(21) Anmeldenummer: 94900812.2
(22) Anmeldetag: 15.11.1993
(51) Int. Cl.: C08F 8/32, C08K 5/3435

(54) **MALEINSÄUREIMID-$g(a)-OLEFIN-COPOLYMERISATE UND IHRE VERWENDUNG ALS LICHTSCHUTZMITTEL UND STABILISATOREN FÜR ORGANISCHES MATERIAL**
MALEIC ACID IMIDE $g(a)-OLEFIN COPOLYMERS AND THEIR USE AS LIGHT-PROTECTION AGENTS AND STABILIZERS FOR ORGANIC MATERIALS
COPOYMERISATS DE L'ACIDE MALEIQUE-$g(a)-OLEFINE ET APPLICATION COMME PRODUITS DE PROTECTION CONTRE LA LUMIERE ET COMME STABILISATEURS POUR LES MATERIAUX ORGANIQUES

(30) Priorität: 24.11.1992 DE 4239437
(43) Veröffentlichungstag der Anmeldung: 13.09.1995
(73) Patentinhaber: BASF Aktiengesellschaft, 67063 Ludwigshafen (DE)
(72) Erfinder: KRAUSE, Alfred, D-68723 Schwetzingen (DE); DENZINGER, Walter, D-67346 Speyer (DE); HETTCHE, Albert, D-67258 Hessheim (DE); AUMUELLER, Alexander, D-67435 Neustadt (DE); TRAUTH, Hubert, D-67373 Dudenhofen (DE)
(86) Internationale Anmeldenummer: EP9303202
(87) Internationale Veröffentlichungsnummer: WO9412544

(56) Entgegenhaltungen:
- EP-A- 0 303 281
- DE-C- 3 024 525
- GB-A- 2 145 100
- US-A- 4 520 171

## Beschreibung

Die vorliegende Erfindung betrifft neue Maleinsäureimid-α-Olefin-Copolymerisate, ein Verfahren zu ihrer Herstellung, ihre Verwendung als Lichtschutzmittel und Stabilisatoren für organisches Material, insbesondere für Kunststoffe und Lacke, sowie mit diesen Copolymerisaten stabilisiertes organisches Material.

Organisches Material, insbesondere Kunststoffe und Lacke, wird bekanntermaßen sehr schnell, vor allem durch Einwirkung von Licht, zerstört. Diese Zerstörung zeigt sich üblicherweise in Vergilbung, Verfärbung, Rißbildung oder Versprödung des Materials. Mit Lichtschutzmitteln und Stabilisatoren soll daher ein zufriedenstellender Schutz gegen die Zerstörung von organischem Material durch Licht, Sauerstoff und Wärme erzielt werden.

So betrifft die DE-C 30 24 525 (1) kationische Maleinsäureanhydrid-Polymerisate aus 0-90 mol-% gegebenenfalls substituierten Ethyleneinheiten und 10-100 mol-% Maleinsäureanhydrideinheiten, die bis zu 67-95 % mit 4-Amino-2,2,6,6-tetramethylpiperidin imidiert sind. Diese Polymerisate eignen sich zur Stabilisierung von Kunststoffen gegen Photo- und Thermozersetzung. Als substituierte Ethyleneinheiten können u.a. solche mit C₁-C₂₀-Alkylresten verwendet werden, d.h. als entsprechende Monomerkomponenten kommen C₃-C₂₂-α-Olefine in Betracht. Die beschriebenen Copolymerisate enthalten Maleinsäureanhydrideinheiten und Ethyleneinheiten vorzugsweise im Verhältnis 1:1 und besitzen vorzugsweise Molgewichte von 1000 bis 2.000.000.

Die GB-A 2 145 100 (2) betrifft ein Copolymerisat aus N-polyalkylpiperidinylsubstituierten Maleinsäureimiden, z.B. N-(2,2,6,6-Tetramethyl-4-piperidinyl)maleinsäureimid, und C₃-C₂₀-α-Olefinen. Dieses Copolymerisat eignet sich als Lichtschutzmittel für Kunststoffe. Als α-Olefine werden beispielsweise 1-Dodecen und 1-Octadecen genannt. Die beschriebenen Copolymerisate weisen ein zahlengemitteltes Molekulargewicht von 1000-50.000, vorzugsweise von 1000-5000 auf.

Die DD-A 262 439 (3) betrifft ein Verfahren zum Stabilisieren von Polymeren gegen Licht und Oxidation mit Ter-, Multi- oder Pfropfpolymerisaten aus Polyalkylpiperidin-haltigen Maleinsäure-Derivaten, z.B. N-(2,2,6,6-Tetramethyl-4-piperidinyl)maleinsäureimid, als erster Komponente, gegebenenfalls substituierten Ethyleneinheiten, z.B. C₃-C₂₀-α-Olefinen, als zweiter Komponente und Maleinsäure, Maleinsäureanhydrid, Maleinsäureamid oder Maleinsäureimid als dritter Komponente, wobei die Verbindungen der dritten Komponente noch O- oder N-alkyl-, aralkyl- oder -phenyl substituiert sein können. Die beschriebenen Polymerisate haben relative Molmassen zwischen 800 und 150.000, vorzugsweise 800 bis 12.000.

Unbefriedigend ist bei derartigen Mitteln des Standes der Technik häufig noch die geringe Verträglichkeit mit Kunststoffen, die geringe Dauer der Schutzwirkung, die Eigenfarbe der Substanzen, die Neigung zur Flüchtigkeit und die thermische Zersetzung der Stabilisatoren beim Einarbeiten bei erhöhter Temperatur.

Aufgabe der vorliegenden Erfindung war es daher, Lichtschutzmittel bzw. Stabilisatoren bereitzustellen, die einen wirkungsvolleren Schutz für organisches Material mit sich bringen.

Demgemäß wurden Maleinsäure-a-Olefin-Copolymerisate, aufgebaut aus Struktureinheiten der Formel I 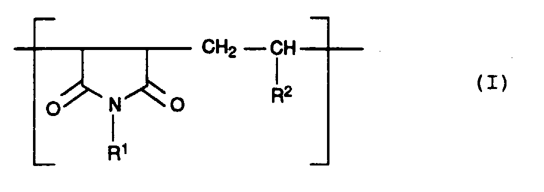 in der R¹ für einen Tetramethylpiperidinyl-Rest der Formel II 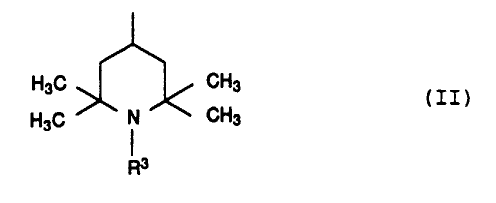 worin R³ Wasserstoff, C₁- bis C₆-Alkyl, Formyl, C₂- bis C₆-Alkanoyl, C₁- bis C₁₂-Alkoxy, C₅- bis C₆-Cycloalkoxy, Cyanomethyl, 2-Hydroxyethyl, Benzyl oder einen Rest der Formel -CR⁴=CH-CO-OR⁵ bezeichnet, wobei
- R⁴: Wasserstoff, C₁- bis C₆-Alkyl oder einen Rest der Formel -CO-OR⁵ bedeutet und
- R⁵: C₁- bis C₁₈-Alkyl, C₅- bis C₈-Cycloalkyl, C₇- bis C₁₈-Aralkyl, Phenyl oder Tolyl bedeutet,
steht, wobei
- R¹: in einer Menge bis zu 8 mol-%, bezogen auf II, auch Wasserstoff, C₁- bis C₂₂-Alkyl oder C₅- bis C₈-Cycloalkyl bezeichnen kann, und
- R²: eine Mischung aus C₁₄- bis C₂₈-Alkylgruppen darstellt, wobei zwei dieser Alkylgruppen, die sich um nicht mehr als zwei C-Atome unterscheiden dürfen, jeweils mindestens 30 % dieser Mischung ausmachen,
mit einem mittleren Molekulargewicht von 1000 bis 50.000 gefunden.

Bevorzugt werden Maleinsäureimid-a-Olefin-Copolymerisate mit einem mittleren Molekulargewicht von 1500 bis 10.000, insbesondere von 2000 bis 5000. Bei den Molekulargewichtsangaben handelt es sich um zahlengemittelte mittlere Molekulargewichte.

Der Rest R² stellt eine Mischung aus C₁₄- bis C₂₈-Alkylgruppen, vorzugsweise C₁₆- bis C₂₄-Alkylgruppen, insbesondere C₁₈- bis C₂₂-Alkylgruppen dar, dem Copolymerisat liegen also C16- bis C₃₀-α-Olefine, vorzugsweise C₁₈- bis C₂₆-α-Olefine, insbesondere C₂₀- bis C₂₄-α-Olefine als Bausteine zugrunde. Bei R² handelt es sich vorzugsweise um lineare Alkylgruppen.

Das Vorliegen einer Mischung von Alkylgruppen für R² ist so zu verstehen, daß im statistischen Mittel über die Gesamtzahl aller vorliegenden Copolymerisat-Moleküle zwei bestimmte Alkylgruppen, die sich um nicht mehr als zwei C-Atome unterscheiden dürfen, jeweils mindestens 30 %, vorzugsweise jeweils mindestens 40 % dieser Mischung ausmachen. Insbesondere sind dies Mischungen von 3 bestimmten Alkylgruppen, z.B. Octadecyl, Eisocyl und Docosyl, wobei zwei dieser Gruppen, die sich um 2 C-Atome unterscheiden, mehr als 40 % und die dritte Gruppe 3 bis 18 % der Mischung ausmachen; hierbei können weitere Alkylgruppen mit etwas weniger als 18 oder etwas mehr als 22 C-Atomen in geringfügigen Mengen, üblicherweise weniger als 2 %, in der Mischung vorliegen.

Als Alkylreste, welche in Form von C₁- bis C₆- (für R³ und R⁴), C₁- bis C₁₈ (für R⁵) und C₁- bis C₂₂-Alkylresten (für R¹) angesprochen werden, kommen verzweigte und insbesondere geradkettige Vertreter in Betracht, so vor allem Methyl, Ethyl, n-Propyl, iso-Propyl, n-Butyl, iso-Butyl, sec.-Butyl, tert.-Butyl, n-Amyl, iso-Amyl, sec.-Amyl, tert.-Amyl, Neopentyl, n-Hexyl, n-Heptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Pentadecyl, n-Hexadecyl, n-Heptadecyl, n-Octadecyl, n-Nonadecyl, n-Eicosyl und n-Docosyl.

Als geradkettiges oder verzweigtes C₂- bis C₆-Alkanoyl für R³ kommen vor allem Acetyl, daneben auch aber auch Propionyl, Butyryl, iso-Butyryl, Pentanoyl und Hexanoyl in Betracht.

Als geradkettige oder verzweigte C₁- bis C₁₂- Alkoxygruppen für R³ eignen sich vor allem C₆- bis C₈-Alkoxygruppen wie n-Hexoxy, iso-Hexoxy, n-Octoxy, 2-Ethylhexoxy und iso-Octoxy, daneben aber auch Methoxy, Ethoxy, n-Propoxy, iso-Propoxy, n-Butoxy, iso-Butoxy, sec.-Butoxy, tert.-Butoxy, n-Pentoxy, n-Nonoxy, n-Decoxy, n-Undecoxy und n-Dodecoxy.

C₅- bis C₆-Cycloalkoxygruppen für R³ sind vor allem Cyclopentoxy und Cyclohexoxy.

Als C₅- bis C₈-Cycloalkylreste für R¹ und R⁵ kommen vor allem Cyclopentyl und Cyclohexyl, daneben auch Cycloheptyl, Cyclooctyl, Methylcyclopentyl, Dimethylcyclopentyl, Methylcyclohexyl, Ethylcyclohexyl und Dimethylcyclohexyl in Betracht.

Als C₇- bis C₁₈-Aralkylreste für R⁵ eignen sich beispielsweise Naphthylmethyl, Diphenylmethyl oder Methylbenzyl, insbesondere jedoch C₇- bis C₁₈-Phenylalkyl wie 1-Phenylethyl, 2-Phenylethyl, 1-Phenylpropyl, 2-Phenylpropyl, 3-Phenylpropyl, 2-Phenylprop-2-yl, 4-Phenylbutyl, 2,2-Dimethyl-2-phenylethyl, 5-Phenylamyl, 10-Phenyldecyl, 12-Phenyldodecyl oder vor allem Benzyl.

Als Tolylreste kommen ortho-, meta und vor allem p-Tolyl in Betracht.

Der Rest R¹ steht vorzugsweise für einen Tetramethylpiperidinyl-rest II, worin R³ Wasserstoff, C₁- bis C₆-Alkyl, insbesondere Methyl, oder einen Rest der Formel -CH-CH-CO-OR⁶ bezeichnet, wobei R⁶ C₁- bis C₆-Alkyl, insbesondere Methyl oder Ethyl, bedeutet.

Das Vorliegen von bis zu 8 mol-%, insbesondere bis zu 5 mol-%, bezogen auf II, Wasserstoff, C₁- bis C₂₂-Alkyl oder C₅- bis C₈-Cycloalkyl als Substituenten R¹ am Maleinsäureimid-Stickstoff ist so zu verstehen, daß im statistischen Mittel über die Gesamtzahl aller vorliegenden Copolymerisat-Moleküle mit Struktureinheiten I diese Mischung aus Tetramethylpiperidinyl-Resten II und anderen Substituenten R¹ auftreten kann. Der Einbau geringer Mengen an von Tetramethylpiperidinyl-Substituenten verschiedenen Resten R¹ bewirkt eine geringfügige Modifikation in den Eigenschaften der erfindungsgemäßen Maleinsäureimid-α-Olefin-Copolymerisate.

Gegenstand der vorliegenden Erfindung ist auch ein Verfahren zur Herstellung der erfindungsgemäßen Maleinsäureimid-α-Olefin-Copolymerisate, welches dadurch gekennzeichnet ist, daß man Maleinsäureanhydrid-α-Olefin-Copolymerisate, aufgebaut aus Struktureinheiten der Formel III 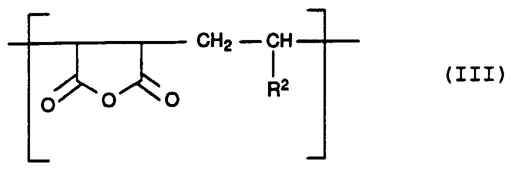 mit 4-Amino-tetramethylpiperidinen der allgemeinen Formel IV 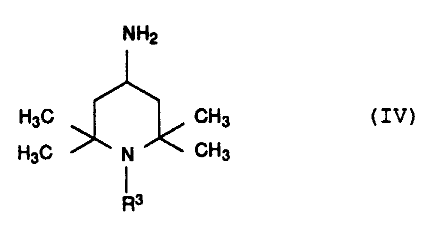 und gewünschtenfalls bis zu 8 mol-%, insbesondere bis zu 5 mol-%, bezogen auf IV, Ammoniak, C₁- bis C₂₂-Alkylamin oder C₅- bis C₈-Cycloalkylamin in einem organischen Lösungsmittel bei 100 bis 220°C umsetzt. Dabei beträgt das molare Verhältnis von Anhydridgruppen in III zu primärem Amin IV zweckmäßigerweise 1:1 oder annähernd 1:1.

Als organische Lösungsmittel eignen sich vor allem aromatische Kohlenwasserstoffe wie Toluol, Xylole oder Mesitylen und Halogen- oder Nitrokohlenwasserstoffe wie Chlorbenzol, Dichlorbenzole oder Nitrobenzol. Insbesondere technische Gemische solcher Aromaten sind von Bedeutung. Daneben sind aber auch aromatenfreie Kohlenwasserstoffgemische einsetzbar, wenn sie einen entsprechend hohen Siedebereich aufweisen.

Als Umsetzungstemperatur sollte vorzugsweise der Bereich von 120 bis 200°C, insbesondere von 140 bis 175°C gewählt werden. Das bei der Umsetzung gebildete Wasser wird zweckmäßigerweise azeotrop abdestilliert. Die Umsetzung wird normalerweise bei Normaldruck durchgeführt und ist in der Regel nach 1 bis 5 Stunden vollständig abgelaufen.

Die als Ausgangsmaterial eingesetzten Maleinsäureanhydrid-α-Olefin-Copolymerisate mit Struktureinheiten III sind nach bekannten Herstellverfahren durch Polymerisation von Maleinsäureanhydrid mit den entsprechenden α-Olefin-Gemischen erhältlich, beispielsweise in Anlehnung an Houben-Weyl, Methoden der Organischen Chemie, Band E20/2, S. 1237-1248 (1987).

Sowohl die erfindungsgemäßen Maleinsäureimid-α-Olefin-Copolymerisate mit Struktureinheiten I als auch die als Ausgangsmaterial eingesetzten Maleinsäureanhydrid-α-Olefin-Copolymerisate mit Struktureinheiten III sind in aller Regel aus Maleinsäure-Derivat und Olefin alternierend aufgebaute 1:1-Copolymerisate.

Die erfindungsgemäßen Maleinsäureimid-α-Olefin-Copolymerisate eignen sich in hervorragender Weise zum Stabilisieren von organischem Material gegen die Einwirkung von Licht, Sauerstoff und Wärme. Sie werden den zu stabilisierenden organischen Materialien in einer Konzentration von 0,01 bis 5 Gew.-% vorzugsweise von 0,02 bis 1 Gew.-%, bezogen auf das organische Material, vor, während oder nach ihrer Herstellung zugesetzt.

Unter organischem Material sind beispielsweise kosmetische Präparate wie Salben und Lotionen, Arzneimittelformulierungen wie Pillen und Zäpfchen, photografisches Aufzeichnungsmaterial wie photografische Emulsionen oder Vorprodukte für Kunststoffe und Lacke, insbesondere jedoch Kunststoff und Lacke selbst, zu verstehen.

Gegenstand der vorliegenden Erfindung ist außerdem gegen die Einwirkung von Licht, Sauerstoff und Wärme stabilisiertes organisches Material, insbesondere Kunststoffe und Lacke, welches die erfindungsgemäßen Copolymerisate in den oben angegebenen Konzentrationen enthält.

Zur Vermischung der erfindungsgemäßen Copolymerisate vor allem mit Kunststoffen können alle bekannten Vorrichtungen und Methoden zum Einmischen von Stabilisierungsmitteln oder anderen Zusätzen in Polymere angewandt werden.

Das durch die erfindungsgemäßen Copolymerisate stabilisierte organische Material kann gegebenenfalls noch weitere Additive enthalten, z.B. Antioxidantien, Lichtstabilisierungsmittel, Metalldesaktivatoren, antistatische Mittel, flammhemmende Mittel, Pigmente und Füllstoffe.

Antioxidantien und Lichtstabilisatoren, die neben den erfindungsgemäßen Copolymerisaten zugesetzt werden können, sind z.B. Verbindungen auf der Basis sterisch gehinderter Phenole oder Schwefel oder Phosphor enthaltende Costabilisatoren.

Als derartige phenolische Antioxidationsmittel seien beispielsweise 2,6-Di-tert.-butyl-4-methylphenol, n-Octadecyl-β-(3,5-di-tert.-butyl-4-hydroxyphenyl)-propionat, 1,1,3-Tris-(2-methyl-4-hydroxy-5-tert.-butyl-phenyl)-butan, 1,3,5-Trimethyl--2,4,6-tris-(3,5-di-tert.-butyl-4-hydroxybenzyl)-benzol, 1,3,5-Tris-(3,5-di-tert.-butyl-4-hydroxybenzyl)-isocyanurat, 1,3,5-Tris-[β-(3,5-di-tert.-butyl-4-hydroxyphenyl)-propionylethyl]-isocyanurat, 1,3,5-Tris-(2,6-dimethyl-3-hydroxy-4-tert.-butylbenzyl)-isocyanurat und Pentaerythrit-tetrakis-[β-(3,5-di-tert.-butyl-4-hydroxyphenyl)-propionat] erwähnt.

Als phosphorhaltige Antioxidantien kommen beispielsweise Tris-(nonylphenyl)-phosphit, Distearylpentaerythritdiphosphit, Tris-(2,4-di-tert.-butyl-phenyl)-phosphit, Tris-(2-tert.-butyl-4-methylphenyl)-phosphit, Bis-(2,4-di-tert.-butylphenyl)pentaerythritdiphosphit und Tetrakis-(2,4-di-tert.-butylphenyl) -4,4'-biphenylendiphosphit in Betracht.

Als Schwefel enthaltende Antioxidationsmittel seien beispielsweise Dilaurylthiodipropionat, Dimyristylthiodipropionat, Distearylthiodipropionat, Pentaerythrittetrakis- (β-laurylthiopropionat) und Pentaerythrittetrakis-(β-hexylthiopropionat) genannt.

Weitere Antioxidantien und Lichtstabilisatoren, die zusammen mit den erfindungsgemäßen Copolymerisaten verwendet werden können, sind z.B. 2-(2'-Hydroxyphenyl)-benztriazole, 2-Hydroxybenzophenone, Arylester von Hydroxybenzoesäuren, α-Cyanozimtsäurederivate, Benzimidazolcarbonsäureanilide, Nickelverbindungen oder Oxalsäuredianilide.

Als Kunststoffe, die durch die erfindungsgemäßen Copolymerisate stabilisiert werden können, seien beispielsweise genannt:
Polymere von Mono- und Diolefinen, wie z.B. Polyethylen niedriger und hoher Dichte, Polypropylen, lineares Polybuten-1, Polyisopren, Polybutadien sowie Copolymerisate von Mono- oder Diolefinen oder Mischungen der genannten Polymeren;
Copolymerisate von Mono- oder Diolefinen mit anderen Vinylmonomeren, wie z.B. Ethylen-Alkylacrylat-Copolymere, Ethylen-Alkylmethacrylat-Copolymere, Ethylen-Vinylacetat-Copolymere oder Ethylen-Acrylsäure-Copolymere;
Polystyrol sowie Copolymere von Styrol oder α-Methylstyrol mit Dienen und/oder Acrylderivaten, wie z.B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS);
Halogenhaltige Polymere, wie z.B. Polyvinylchlorid, Polyvinylfluorid, Polyvinylidenfluorid sowie deren Copolymere;
Polymere, die sich von α,β-ungesättigten Säuren und deren Derivaten ableiten, wie Polyacrylate, Polymethacrylate, Polyacrylamide und Polyacrylnitrile;
Polymere, die sich von ungesättigten Alkoholen und Aminen bzw. von deren Acrylderivaten oder Acetalen ableiten, z.B. Polyvinylalkohol und Polyvinylacetat;
Polyurethane, Polyamide, Polyharnstoffe, Polyester, Polycarbonate, Polysulfone, Polyethersulfone und Polyetherketone.

Weiterhin können mit den erfindungsgemäßen Copolymerisaten Lacküberzüge stabilisiert werden, z.B. Industrielackierungen. Unter diesen sind Einbrennlackierungen, unter diesen wiederum Fahrzeuglackierungen, vorzugsweise Zweischichtlackierungen, besonders hervorzuheben. Ein anderes Verwendungsgebiet sind z.B. Anstrichmittel für Außenanstriche von Gebäuden, anderen Bauwerken oder technischen Apparaturen.

Die erfindungsgemäßen Copolymerisate können in fester oder gelöster Form dem Lack zugesetzt werden. Ihre gute Löslichkeit in Lacksystemen ist dabei von besonderem Vorteil.

Bevorzugt werden die erfindungsgemäßen Copolymerisate zum Stabilisieren von Polyamiden sowie ABS- und SAN-Polymeren, insbesondere von Formmassen hieraus, und von Lacküberzügen verwendet.

Ein weiteres bevorzugtes Einsatzgebiet ist die Stabilisierung von Polyethylen niedriger und hoher Dichte, sowie von Polypropylen und Polyamid, beispielsweise auch von Fasern hieraus.

Die erfindungsgemäßen Copolymerisate sind aufgrund ihrer Migrationsbeständigkeit besonders zum Stabilisieren von Gegenständen mit einem großen Quotienten aus Oberfläche zu Volumen, insbesondere also von Folien, Bändchen und Fasern, geeignet.

Die erfindungsgemäßen Copolymerisate zeichnen sich durch eine gute Verträglichkeit mit den üblichen Kunststoffarten und durch eine gute Löslichkeit und eine ausgezeichnete Verträglichkeit in den üblichen Lacksystemen aus. Sie haben in der Regel keine oder nur eine sehr geringe Eigenfarbe, sind bei den üblichen Kunststoff- und Lack-Verarbeitungstemperaturen stabil und nicht flüchtig und bewirken vor allen Dingen eine lange Schutzdauer der mit ihnen behandelten Materialien.

Das überraschende Ergebnis, daß ein erfindungsgemäßes Maleinsäureimid-α-Olefin-Copolymerisat mit einem Gemisch aus C₁₈- bis C₂₂-Alkylgruppen als Rest R² (s. Beispiel) im Vergleich zu dem aus (2) bekannten analogen Maleinsäureimid-α-Olefin-Copolymerisat mit einer C₁₆-Alkylgruppe als Rest R² (s. Vergleichsbeispiel A) deutliche Vorteile in der Wirkung aufweist, ist durch den aufgeführten Vergleich der beiden Copolymerisate in Polypropylen-Spritzgußteilen dokumentiert.

### Beispiel

Zu einer Lösung von 203 g eines alternierenden 1:1-Copolymerisates aus Maleinsäureanhydrid und einem α-Olefin-Gemisch der Zusammensetzung

| | |
|---|---|
| Octadec-1-en | 1 Gew.-% |
| Eicos-1-en | 49 Gew.-% |
| Docos-1-en | 42 Gew.-% |
| Tetracos-1-en | 8 Gew.-% |
| Hexacos-1-en | <0,1 Gew.-% |

in 400 ml eines handelsüblichen aromatischen Kohlenwasserstoffgemisches mit einem Siedebereich von 160-170°C wurden innerhalb von 20 min unter Rückfluß 117 g 4-Amino-2,2,6,6-tetramethylpiperidin getropft. Danach wurde noch 180 min bei derselben Temperatur zum Sieden erhitzt. Nachdem sich kein Wasser mehr am Wasserabscheider abschied, wurde das Lösungsmittel im Vakuum abdestilliert. Die erstarrte Schmelze wurde gemahlen und ergab 250 g N- (2,2,6,6-Tetramethyl-4-piperidinyl)-maleinsäureimid-C₂₀-C₂₄-α-Olefin-Copolymerisat in Form eines hellgelben Pulvers vom Schmelzpunkt 104-111°C.

### Vergleichsbeispiel A

Analog zum Beispiel wurde aus alternierendem 1:1-Maleinsäureanhydrid-Octadec-1-en-Copolymerisat N-(2,2,6,6-Tetramethyl-4-piperidinyl)-maleinsäureimid-Octadec-1-en-Copolymerisat mit einem Schmelzpunkt von 60-69°C hergestellt.

### Anwendungstechnische Eigenschaften

### Herstellung von Polypropylen-Prüfkörpern

0,5 Gew.-% des Stabilisators aus dem Beispiel bzw. Vergleichsbeispiel A wurden in Polypropylen vom Typ Novolenl® 1100 C durch einmaliges Extrudieren bei 240°C Massetemperatur im Polymer gelöst und das anfallende Granulat wurde zu 2 mm dicken Prüfkörpern bei 240°C gespritzt.

Die Prüflinge wurden in einem Schnellbewitterungsgerät vom Typ Xenotest® 1200 auf ihre Licht- und Wetterechtheit getestet. Ein Maß für den photooxidativen Abbau des Polymeren ist in Abhängigkeit von der Bewitterungszeit die Oberflächenbeschaffenheit des Prüflings. Festgehalten wurde daher die Zeit bis zum Auftreten der ersten Rißbildung.

Bei den Prüfkörpern, die den Stabilisator des Standes der Technik aus Vergleichsbeispiel A enthielten, trat die Rißbildung bereits nach 2500 Stunden auf, bei den Prüfkörpern, die den erfindungsgemäßen Stabilisator aus dem Beispiel enthielten, jedoch erst nach 3000 Stunden.

## Patentansprüche

1. Maleinsäureimid-α-Olefin-Copolymerisate, aufgebaut aus Struktureinheiten der Formel I 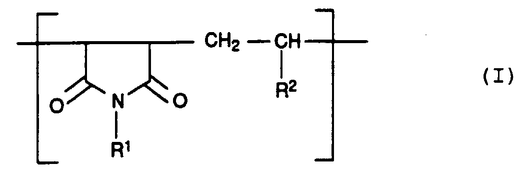 in der R¹ für einen Tetramethylpiperidinyl-Rest der Formel II 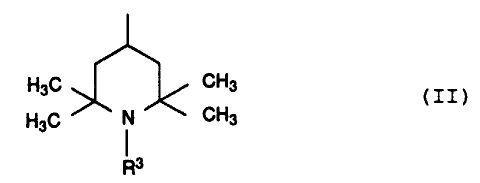 worin R³ Wasserstoff, C₁- bis C₆-Alkyl, Formyl, C₂- bis C₆-Alkanoyl, C₁- bis C₁₂-Alkoxy, C₅- bis C₆-Cycloalkoxy, Cyanomethyl, 2-Hydroxyethyl, Benzyl oder einen Rest der Formel -CR⁴=CH-CO-OR⁵ bezeichnet, wobei
R⁴ Wasserstoff, C₁- bis C₆-Alkyl oder einen Rest der Formel -CO-OR⁵ bedeutet und
R⁵ C₁- bis C₁₈-Alkyl, C₅- bis C₈-Cycloalkyl, C₇- bis C₁₈-Aralkyl, Phenyl oder Tolyl bedeutet,
steht, wobei
R¹ in einer Menge bis zu 8 mol-%, bezogen auf II, auch Wasserstoff, C₁- bis C₂₂-Alkyl oder C₅- bis C₈-Cycloalkyl bezeichnen kann, und
R² eine Mischung aus C₁₄- bis C₂₈-Alkylgruppen darstellt, wobei zwei dieser Alkylgruppen, die sich um nicht mehr als zwei C-Atome unterscheiden dürfen, jeweils mindestens 30 % dieser Mischung ausmachen,
mit einem mittleren Molekulargewicht von 1000 bis 50.000.

2. Maleinsäureimid-α-Olefin-Copolymerisate nach Anspruch 1, bei denen R² eine Mischung aus C₁₆- bis C₂₄-Alkylgruppen darstellt, wobei zwei dieser Alkylgruppen, die sich um nicht mehr als zwei C-Atome unterscheiden dürfen, jeweils mindestens 40 % dieser Mischung ausmachen.

3. Maleinsäureimid-α-Olefin-Copolymerisate nach Anspruch 1 oder 2, bei denen R¹ für einen Tetramethylpiperidinyl-Rest II, worin R³ Wasserstoff, C₁- bis C₆-Alkyl oder einen Rest der Formel -CH=CH-CO-OR⁶ bezeichnet, wobei R⁶ C₁ bis C₆-Alkyl bedeutet, steht.

4. Verfahren zur Herstellung von Maleinsäureimid-α-Olefin-Copolymerisaten gemäß den Ansprüchen 1 bis 3, dadurch gekennzeichnet, daß man Maleinsäureanhydrid-α-Olefin-Copolymerisate, aufgebaut aus Struktureinheiten der Formel III 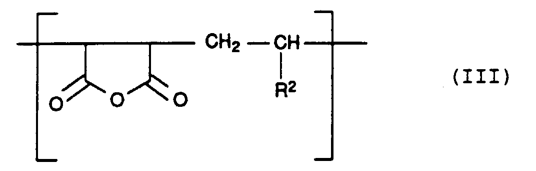 mit 4-Amino-tetramethylpiperidinen der allgemeinen Formel IV 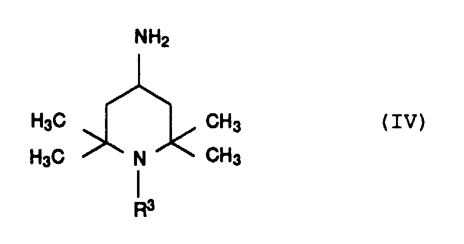 und gewünschtenfalls bis zu 8 mol-%, bezogen auf IV, Ammoniak, C₁- bis C₂₂-Alkylamin oder C₅- bis C₈-Cycloalkylamin in einem organischen Lösungsmittel bei 100 bis 220°C umsetzt.

5. Gegen die Einwirkung von Licht, Sauerstoff und Wärme stabilisiertes organisches Material, enthaltend 0,01 bis 5 Gew.-%, bezogen auf die Menge des organischen Materials, einer oder mehrerer Maleinsäure-α-Olefin-Copolymerisate gemäß den Ansprüchen 1 bis 3.

6. Gegen die Einwirkung von Licht, Sauerstoff und Wärme stabilisierte Kunststoffe und Lacke, enthaltend 0,01 bis 5 Gew.-%, bezogen auf die Menge der Kunststoffe bzw. Lacke, einer oder mehrerer Maleinsäure-α-Olefin-Copolymerisate gemäß den Ansprüchen 1 bis 3.

7. Verwendung von Maleinsäure-α-Olefin-Copolymerisaten gemäß den Ansprüchen 1 bis 3 als Lichtschutzmittel und Stabilisatoren für organisches Material.

8. Verwendung von Maleinsäure-α-Olefin-Copolymerisaten gemäß den Ansprüchen 1 bis 3 als Lichtschutzmittel und Stabilisatoren für Kunststoffe und Lacke.

9. Verfahren zum Stabilisieren von organischem Material gegen die Einwirkung von Licht, Sauerstoff und Wärme, dadurch gekennzeichnet, daß man hierzu Maleinsäure-α-Olefin-Copolymerisate gemäß den Ansprüchen 1 bis 3 verwendet.

10. Verfahren zum Stabilisieren von Kunststoffen und Lacken gegen die Einwirkung von Licht, Sauerstoff und Wärme, dadurch gekennzeichnet, daß man hierzu Maleinsäure-α-Olefin-Copolymerisate gemäß den Ansprüchen 1 bis 3 verwendet.

## Claims

1. A maleimide/α-olefin copolymer composed of structural units of the formula I 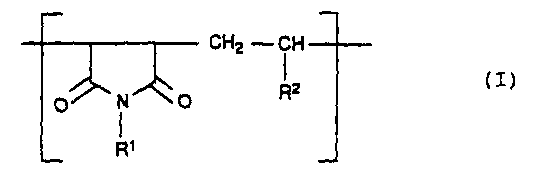 where R¹ is a tetramethylpiperidinyl radical of the formula II 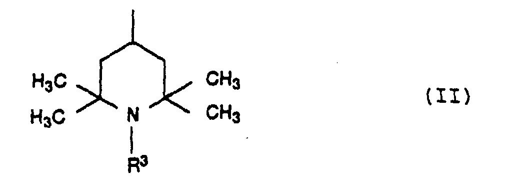
R³ is hydrogen, C₁-C₆-alkyl, formyl, C₂-C₆-alkanoyl, C₁-C₁₂-alkoxy, C₅- or C₆-cycloalkoxy, cyanomethyl, 2-hydroxyethyl, benzyl or a radical of the formula -CR⁴=CH-CO-OR⁵,
R⁴ is hydrogen, C₁-C₆-alkyl or a radical of the formula -CO-OR⁵, and
R⁵ is C₁-C₁₈-alkyl, C₅-C₈-cycloalkyl, C₇-C₁₈-aralkyl, phenyl or tolyl, and
up to 8 mol %, based on II, of R¹ may furthermore be hydrogen, C₁-C₂₂-alkyl or C₅-C₈-cycloalkyl, and
R₂ is a mixture of C₁₄-C₂₈-alkyl groups, where two of these alkyl groups, which may differ by no more than two carbon atoms, account in each case for at least 30% of this mixture,
having an average molecular weight of from 1,000 to 50,000.

2. A maleimide/α-olefin copolymer as claimed in claim 1, in which R² is a mixture of C₁₆-C₂₄-alkyl groups, where two of these alkyl groups, which may differ by no more than two carbon atoms, account in each case for at least 40 % of this mixture.

3. A maleimide/α-olefin copolymer as claimed in claim 1 or 2, in which R¹ is a tetramethylpiperidinyl radical II, where R³ is hydrogen, C₁-C₆-alkyl or a radical of the formula -CH=C-CO-OR⁶ and R⁶ is C₁-C₆-alkyl.

4. A process for the preparation of a maleimide/α-olefin copolymer as claimed in any of claims 1 to 3, wherein a maleic anhydride/α-olefin copolymer composed of structural units of the formula III 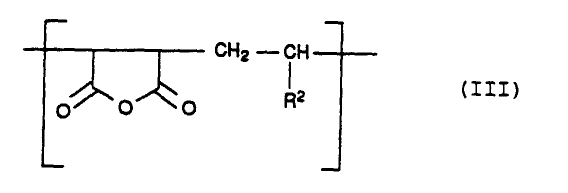 is reacted with a 4-aminotetramethylpiperidine of the formula IV 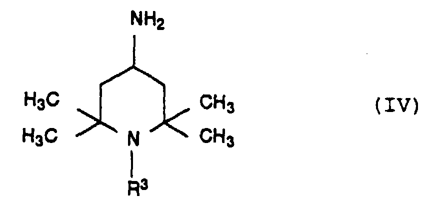 and, if desired, up to 8 mol %, based on IV, of ammonia, a C₁-C₂₂-alkylamine or a C₅-C₈-cycloalkylamine in an organic solvent at from 100 to 220°C.

5. An organic material stabilized to the action of light, oxygen and heat, containing from 0.01 to 5% by weight, based on the amount of the organic material, of one or more maleimide/α-olefin copolymers as claimed in any of claims 1 to 3.

6. A plastic or surface coating stabilized to the action of light, oxygen and heat, containing from 0.01 to 5 % by weight, based on the amount of the plastic or surface coating, of one or more maleimide/α-olefin copolymers as claimed in any of claims 1 to 3.

7. Use of a maleimide/α-olefin copolymer as claimed in any of claims 1 to 3 as a light stabilizer and as a stabilizer for organic material.

8. Use of a maleimide/α-olefin copolymer as claimed in any of claims 1 to 3 as a light stabilizer and as a stabilizer for plastics and surface coatings.

9. A method for stabilizing organic material to the action of light, oxygen and heat, wherein a maleimide/α-olefin copolymer as claimed in any of claims 1 to 3 is used for this purpose.

10. A method for stabilizing plastics and surface coatings to the action of light, oxygen and heat, wherein a maleimide/α-olefin copolymer as claimed in any of claims 1 to 3 is used for this purpose.

## Revendications

1. Copolymères de l'imide de l'acide maléique et d'une α-oléfine, constitués d'unités de structure de la formule I 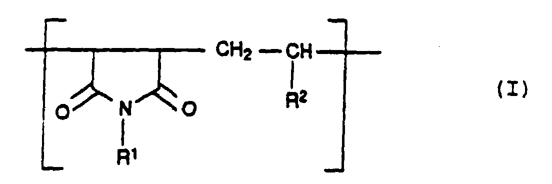 dans laquelle R¹ représente un radical tétraméthylpipéridinyle de la formule II 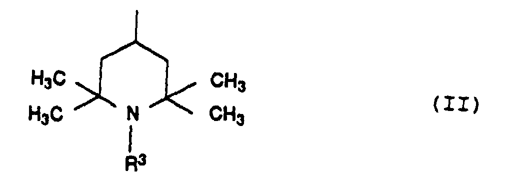 dans laquelle R³ représente un atome d'hydrogène, un radical alkyle en C₁ à C₆, formyle, alcanoyle en C₂ à C₆, alcoxy en C₁ à C₁₂, cycloalcoxy en C₅ à C₆, cyanométhyle, 2-hydroxyéthyle, benzyle, ou un radical de la formule -CR⁴=CH-CO-OR⁵, où
R⁴ représente un atome d'hydrogène, un radical alkyle en C₁ à C₆, ou un radical de la formule -CO-OR⁵ et
R⁵ représente un radical alkyle en C₁ à C₁₈, cycloalkyle en C₅ à C₈, aralkyle en C₇ à C₁₈, phényle ou tolyle,
où
R¹, en une proportion allant jusqu'à 8% molaires, par rapport à II, peut aussi représenter de l'hydrogène, un radical alkyle en C₁ à C₂₂, ou un radical cycloalkyle en C₅ à C₈ et
R² représente un mélange constitué de radicaux alkyle en C₁₄ à C₂₈, où deux de ces groupes alkyle qui ne peuvent pas se différencier de plus de deux atomes de carbone, constituent à chaque fois au moins 30% de ce mélange,
d'un poids moléculaire moyen de 1000 à 50.000.

2. Copolymères de l'imide de l'acide maléique et d'une α-oléfine suivant la revendication 1, dans lesquels R² représente un mélange de radicaux alkyle en C₁₆ à C₂₄, où deux de ces radicaux alkyle, qui ne peuvent se différencier de plus de deux atomes de carbone, constituent à chaque fois au moins 40% de ce mélange.

3. Copolymères de l'imide de l'acide maléique et d'une α-oléfine suivant la revendication 1 ou 2, dans lesquels R¹ représente un radical tétraméthylpipéridinyle II, où R³ représente un atome d'hydrogène, un radical alkyle en C₁ à C₆, ou un radical de la formule -CH=CH-CO-OR⁶ où R⁶ représente un groupe alkyle en C₁ à C₆.

4. Procédé de préparation de copolymères de l'imide de l'acide maléique et d'une α-oléfine suivant les revendications 1 à 3, caractérisé en ce que l'on fait réagir des copolymères de l'anhydride maléique et d'une α-oléfine, constitués d'unités de structure de la formule III 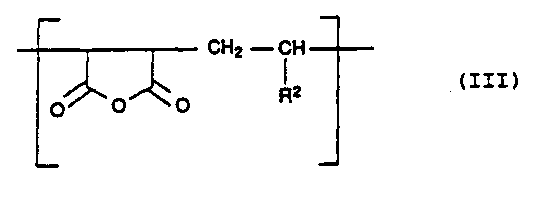 avec des 4-aminotétraméthylpipéridines de la formule générale IV 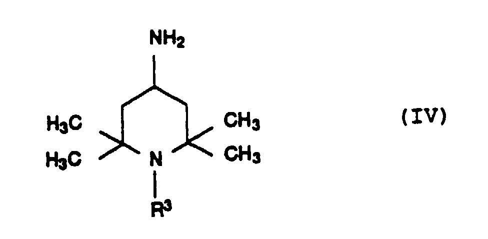 et, si cela se révèle souhaitable, jusqu'à 8% molaires, par rapport à IV, d'ammoniac, d'une alkylamine en C₁ à C₂₂ ou d'une cycloalkylamine en C₅ à C₈, dans un solvant organique, à une température qui varie de 100 à 220°C.

5. Matière organique stabilisée contre l'influence de la lumière, de l'oxygène et de la chaleur, contenant 0,01 à 5% en poids, par rapport à la quantité de la matière organique, d'un ou plusieurs copolymères de l'acide maléique et d'une α-oléfine suivant les revendications 1 à 3.

6. Laques et matières plastiques stabilisées contre l'influence de la lumière, de l'oxygène et de la chaleur, contenant 0,01 à 5% en poids, par rapport à la masse des matières plastiques ou des laques, d'un ou plusieurs copolymères de l'acide maléique et d'une α-oléfine suivant les revendications 1 à 3.

7. Utilisation de copolymères de l'acide maléique et d'une α-oléfine suivant les revendications 1 à 3, à titre d'agents photoprotecteurs et de stabilisateurs pour une matière organique.

8. Utilisation de copolymères de l'acide maléique et d'une α-oléfine suivant les revendications 1 à 3, à titre d'agents photoprotecteurs et stabilisateurs pour des matières plastiques et des laques.

9. Procédé de stabilisation d'une matière organique contre l'influence de la lumière, de l'oxygène et de la chaleur, caractérisé en ce que l'on utilise à cette fin, des copolymères de l'acide maléique et d'une α-oléfine suivant les revendications 1 à 3.

10. Procédé de stabilisation de matières plastiques et de laques contre l'influence de la lumière, de l'oxygène et de la chaleur, caractérisé en ce que l'on utilise à cette fin, des copolymères de l'acide maléique et d'une α-oléfine suivant les revendications 1 à 3.
